# FASCICULE DE BREVET EUROPEEN

(11) **EP 2 253 562 B1**
(45) Date de publication et mention de la délivrance du brevet: **02.05.2012**
(21) Numéro de dépôt: 10360022.7
(22) Date de dépôt: 05.05.2010
(51) Int. Cl.: B65D 88/12, B60P 7/10, B60P 3/00

(54) **Dispositif pour le transport d'objets, notamment d'éléments préfabriqués sous forme de plaques**
Transportvorrichtung für vorgefertigte plattenförmige Elemente
Device for transporting prefabricated flat objects.

(30) Priorité: 13.05.2009 FR 0953174
(43) Date de publication de la demande: 24.11.2010
(73) Titulaire: Rector Lesage S.A., 68200 Mulhouse (FR)
(72) Inventeur: Gillmann, Daniel, 67120 Wolxheim (FR)
(74) Mandataire: Nithardt, Roland

(56) Documents cités:
- EP-A- 1 468 939
- FR-A- 2 904 611
- US-A1- 2009 245 988

## Description

### Domaine technique:

La présente invention concerne un dispositif pour le transport d'objets, notamment d'éléments préfabriqués sous forme de plaques ou similaires, comportant un plateau porte-charge destiné à recevoir lesdits objets entreposés sur leur chant, ce plateau porte-charge comportant à son extrémité avant une paroi verticale à laquelle sont fixés lesdits objets, une extrémité arrière libre et deux côtés longitudinaux comportant des moyens de réception d'une remorque, ce dispositif comportant également des moyens de stabilisation agencés pour stabiliser latéralement ledit dispositif lorsqu'il repose au sol.

### Technique antérieure :

Ce type de dispositif est par exemple utilisé pour stocker et transporter des éléments préfabriqués sous forme de plaques pour l'industrie du bâtiment, tels que des prémurs (coffrage perdu en béton pour couler les murs sur chantier), des parois, des cloisons, des dalles, ou similaires, mais pas exclusivement. Ces éléments préfabriqués sont généralement stockés et transportés verticalement entre l'usine de fabrication et le chantier de façon à pouvoir être posés par les entreprises du bâtiment sans avoir à les retourner. Afin de pouvoir les fabriquer et les transporter dans des hauteurs importantes, par exemple jusqu'à 3,80m, une solution consiste à utiliser des remorques spéciales auto-déchargeables sans essieu arrière commercialisées sous les marques Faymonville, Langendorf, etc. tractées par un engin motorisé tel qu'un tracteur de camion. Ces remorques ont une forme en U, ouverte à l'arrière et peuvent être abaissées jusqu'au sol pour charger et décharger les dispositifs de transport. Ces dispositifs de transport, appelés aussi des conteneurs, sont réalisés à partir de profilés métalliques, ont une largeur par exemple égale à 1,5m qui correspond à la largeur disponible à l'intérieur de la remorque, et une longueur qui peut atteindre par exemple 12m. Ils offrent par conséquent une surface au sol très étroite par rapport à la hauteur des éléments préfabriqués qu'ils portent et sont de ce fait sujets au renversement sous l'effet du vent. Ils doivent être stabilisés lorsqu'ils sont au sol, à l'usine ou sur chantier, étant précisé que sur chantier, le sol n'est pas plan. Les fabricants de murs en béton et les fabricants de conteneurs ont étudié et mis au point divers types de stabilisateurs, ceux-ci étant toujours fixés sur la paroi verticale sur laquelle sont fixés les éléments préfabriqués. Pour des questions de sécurité au freinage pendant le transport, cette paroi verticale est toujours située à l'avant de la remorque. Les stabilisateurs qui dépassent latéralement du dispositif de transport lorsqu'il est posé au sol sur le chantier doivent donc pouvoir se replier au moment du chargement du dispositif par la remorque et se déplier lors de son déchargement.

Une solution est décrite dans la publication FR 2.904.611 et consiste en des pattes d'appui pivotantes, articulées aux montants latéraux de la paroi verticale autour d'un axe incliné, pour s'escamoter automatiquement lors du chargement et se superposer aux côtés longitudinaux du plateau porte-charge et pour se déplier automatiquement lors du déchargement et reposer au sol. Ces stabilisateurs escamotables sont fragiles du fait de leur mobilité et supportent en général assez mal les conditions de travail sur les chantiers auxquelles ils sont soumis. Le prix de leur réalisation n'est pas négligeable étant donné qu'ils doivent être fiables et fonctionner automatiquement pour garantir la stabilité des conteneurs et la sécurité des personnes. De plus, ils offrent une surface au sol relativement faible, presque ponctuelle, et ne sont pas exemptés d'un calage manuel pour compenser les écarts de dénivelé.

Une autre solution, décrite dans le document US 2009/0245988 consiste à équiper les quatre coins d'un plateau porte-charge de stabilisateurs se présentant chacun sous la forme d'un bras s'étendant latéralement audit plateau porte-charge. Une extrémité de ce bras est fixée au niveau d'un bord longitudinal dudit plateau porte-charge, tandis que l'extrémité libre comporte un pied pourvu d'une patte d'appui au sol et de moyens de réglage manuel en hauteur, afin d'équilibrer le plateau porte-charge lorsqu'il repose au sol. Une telle configuration nécessite cependant le démontage des stabilisateurs préalablement au chargement du plateau porte-charge sur une remorque, et conduit donc à augmenter le nombre de manoeuvres à effectuer par l'opérateur.

D'autres solutions plus simples et moins onéreuses consistent en des béquilles amovibles placées manuellement de part et d'autre de la paroi verticale et/ou des éléments préfabriqués, ce qui constitue une solution artisanale non satisfaisante pour la sécurité des ouvriers.

### Exposé de l'invention :

La présente invention vise à pallier ces inconvénients en proposant un dispositif de transport équipé de moyens de stabilisation réalisables à des coûts raisonnables, qui sont simples et robustes, qui offrent une plus grande stabilité au sol et permettent de garantir la sécurité des personnes, et qui peuvent équiper des dispositifs déjà en service.

Dans ce but, l'invention concerne un dispositif de transport du genre indiqué en préambule, caractérisé en ce que lesdits moyens de stabilisation sont disposés par paire de part et d'autre dudit plateau porte-charge, à distance de ladite paroi verticale, et s'étendent latéralement desdits côtés longitudinaux dudit plateau.

Dans une première variante de réalisation, les moyens de stabilisation sont avantageusement disposés dans une zone arrière du plateau porte-charge à l'opposé de ladite paroi verticale, ladite zone arrière étant destinée à être située en dehors des roues arrières de la remorque, et peuvent être fixes, démontables ou non.

Ces moyens de stabilisation peuvent comporter au moins deux pattes d'appui montées de part et d'autre du plateau porte-charge dans les moyens de réception, ces pattes d'appui pouvant comporter chacune une rampe inclinée située dans les moyens de réception et dont la pente est décroissante en direction de la paroi verticale.

Les moyens de stabilisation peuvent aussi comporter au moins un profilé d'appui fixé à l'extrémité arrière libre et s'étendant latéralement du plateau porte-charge, ce profilé d'appui pouvant comporter des butées verticales auxquelles lesdits objets peuvent être fixés.

Lorsque les pattes d'appui sont démontables, elles peuvent comporter chacune au moins une clé de verrouillage emboîtée dans au moins une encoche de la patte d'appui et au moins un verrou amovible agencé pour bloquer en position la clé de verrouillage dans l'encoche.

Dans une autre forme de réalisation, les moyens de stabilisation sont escamotables et peuvent comporter au moins deux pattes d'appui montées sur le plateau porte-charge articulées autour d'un axe perpendiculaire audit plateau pour être mobiles entre une position sortie dans laquelle elles s'étendent latéralement du plateau porte-charge lorsque le dispositif repose au sol et une position rentrée dans laquelle elles sont escamotées à l'intérieur du plateau porte-charge lorsque le dispositif est chargé sur la remorque.

Dans cette variante, les pattes d'appui sont avantageusement guidées dans des fentes latérales prévues dans les moyens de réception, sont articulées entre elles autour dudit axe perpendiculaire qui se déplace par rapport au plateau porte-charge pour passer de la position sortie à la position rentrée, et sont assujetties à un organe de rappel qui les ramène automatiquement de leur position rentrée à leur position sortie. Ces pattes d'appui peuvent comporter une rampe de guidage destinée à recevoir l'extrémité d'une cornière de la remorque de sorte à provoquer le déplacement automatique de leur position sortie à leur position rentrée lorsque la remorque charge ledit dispositif.

### Description sommaire des dessins:

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en perspective d'un dispositif de transport selon l'invention équipé de moyens de stabilisation fixes selon un premier mode de réalisation,
- les figures 1A, 1B et 1C sont respectivement une vue du détail A, de côté et arrière du dispositif de la figure 1,
- les figures 2A, 2B et 2C sont des vues de côté schématiques du dispositif de la figure 1 en cours de chargement par une remorque tractée,
- les figures 3 et 4 sont des vues similaires à la figure 1 de deux autres modes de réalisation des moyens de stabilisation fixes,
- les figures 5A, 5B, 5C et 5D sont des vues partielles agrandies du dispositif de transport selon l'invention équipé de moyens de stabilisation démontables, dans différentes phases entre la position montée et la position démontée,
- les figures 6A, 6B et 6C sont des vues partielles agrandies du dispositif de transport selon l'invention équipé de moyens de stabilisation escamotables, respectivement en position sortie, en position intermédiaire et en position rentrée, et
- les figures 7A, 7B sont des vues partielles agrandies du dispositif de transport selon l'invention équipé de moyens de stabilisation escamotables conformes à une autre variante de réalisation, respectivement en position déployée, et en position rétractée.

### Illustrations de l'invention et différentes manières de la réaliser :

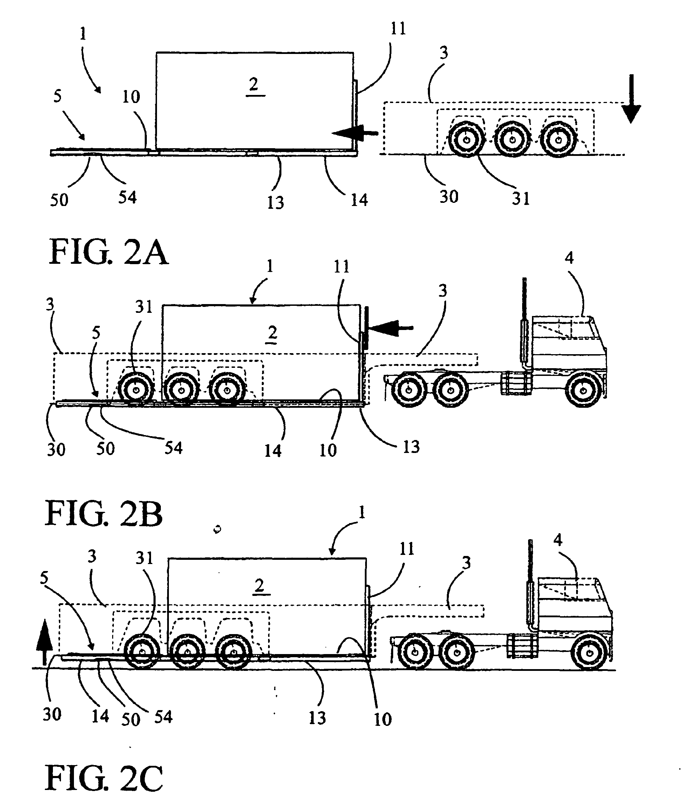

En référence aux figures, le dispositif 1 selon l'invention est destiné au transport d'objets 2, notamment d'éléments préfabriqués sous forme de plaques ou similaires, stockés verticalement sur un plateau porte charge 10 pourvu à son extrémité avant d'une paroi verticale 11 à laquelle peuvent être fixés les objets, d'une extrémité arrière libre 12 et de deux côtés longitudinaux 13. Ces côtés longitudinaux 13 comportent des moyens de réception 14 d'une remorque 3 reliée à un tracteur 4 (cf. fig. 2A à 2C). Ces moyens de réception 14 peuvent être constitués par les profilés longitudinaux formant les côtés 13 du plateau porte-charge 10, comme dans les exemples illustrés, par des profilés spécifiques ou tout autre moyen équivalent ayant une forme en U, C, H ou autre, adaptée pour recevoir par une liaison coulissante des cornières par exemple en forme de L prévues sur la remorque 3. Tout autre moyen de réception peut convenir pourvu qu'il soit adapté à la remorque.

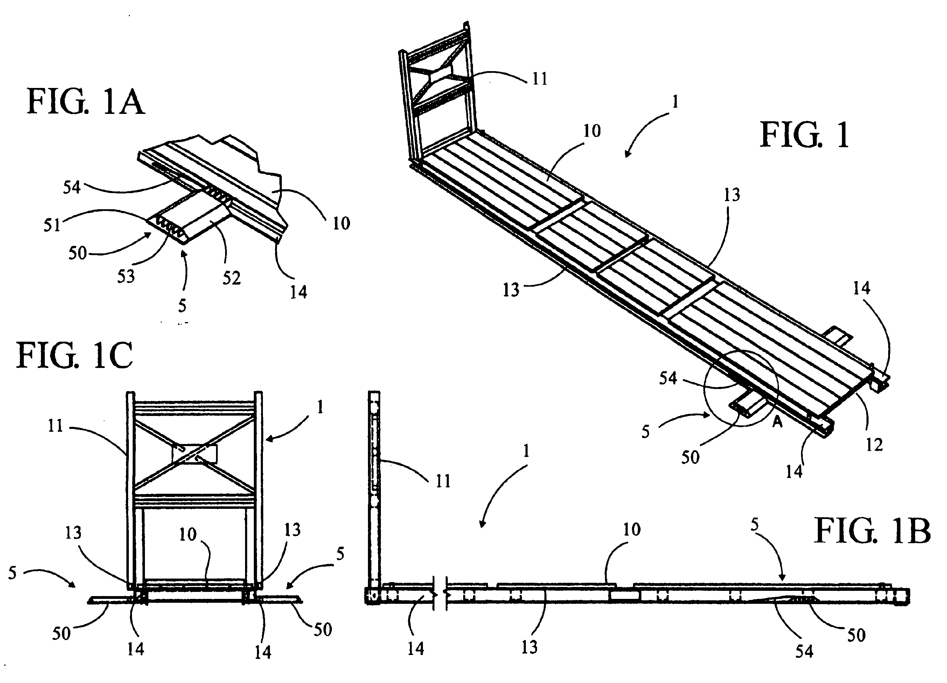

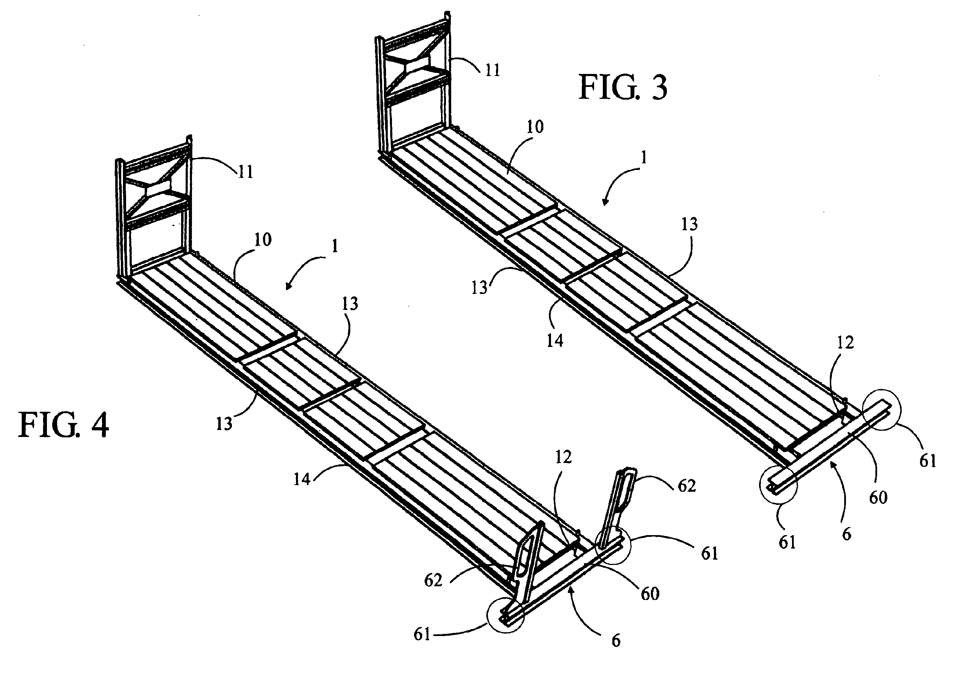

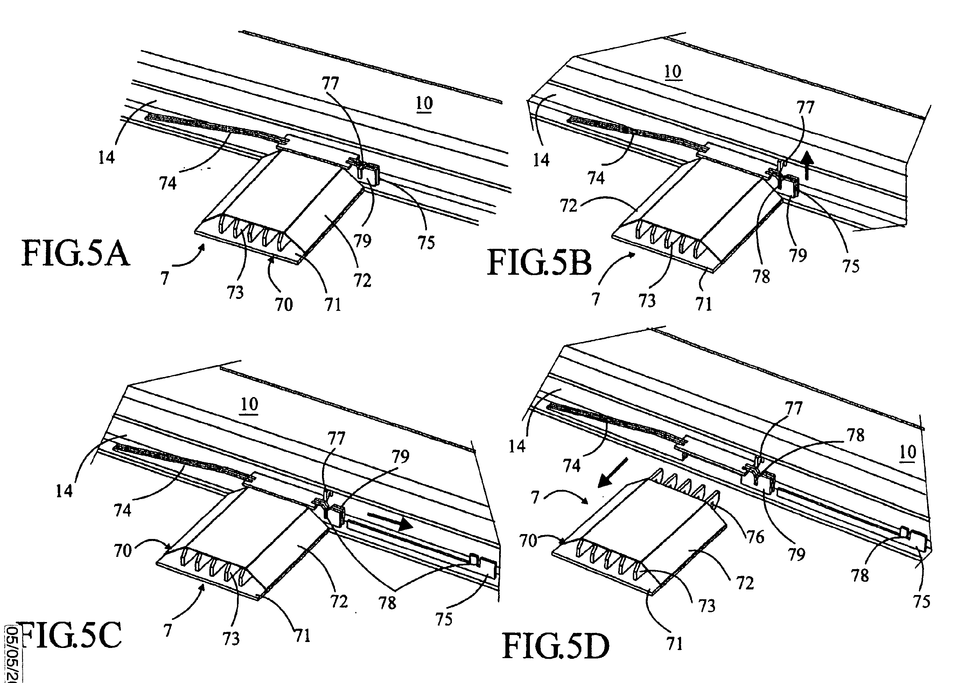

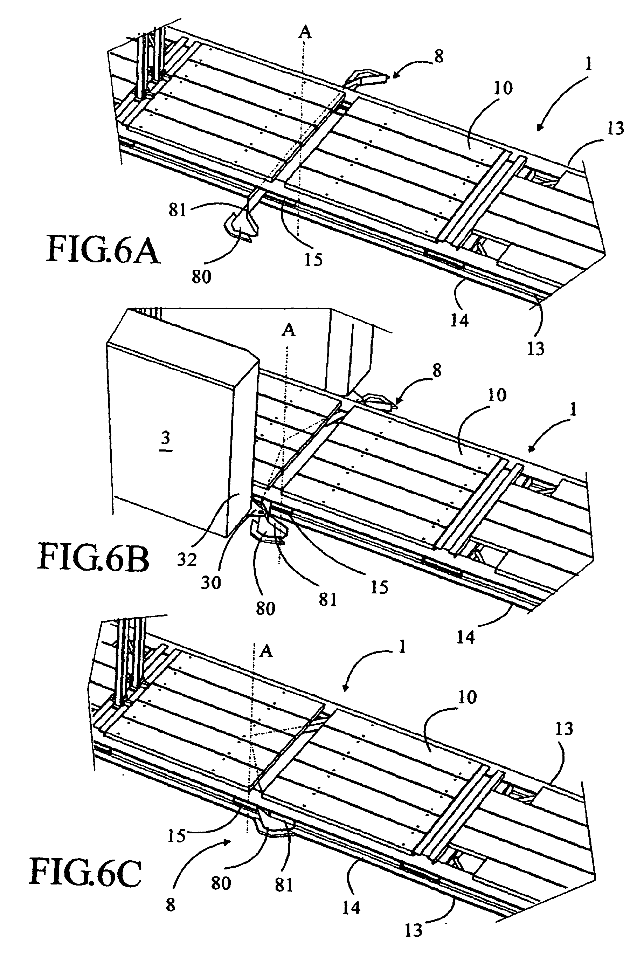

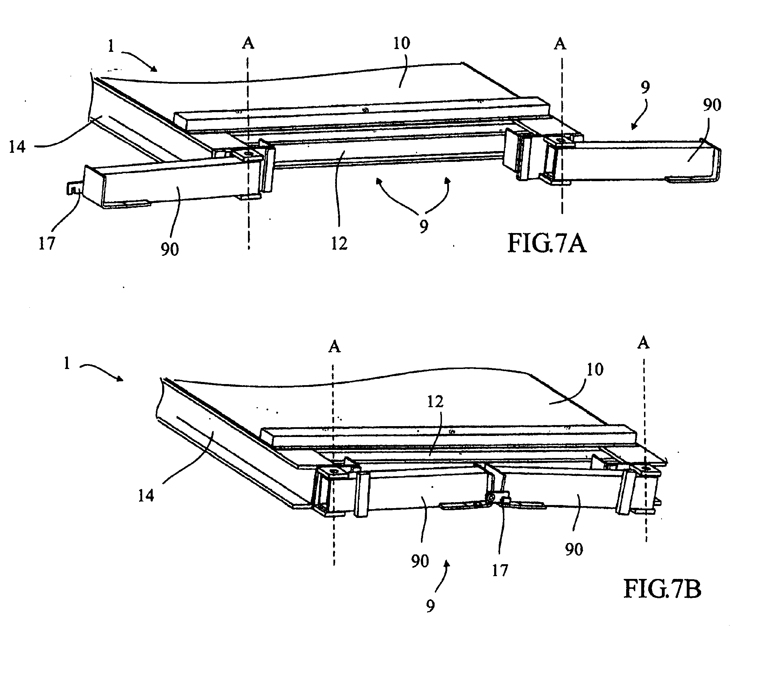

Ce dispositif de transport 1 comporte des moyens de stabilisation 5 à 9 agencés pour augmenter son envergure latérale au sol afin de le stabiliser lorsqu'il est en charge et éviter tout risque de basculement sous l'effet par exemple du vent. Plusieurs formes de réalisation de moyens de stabilisation sont décrits en référence aux figures annexées, ces moyens de stabilisation étant disposés par paire de part et d'autre du plateau porte-charge 10, à distance de la paroi verticale 11 pour répartir les efforts de manière plus uniforme, et s'étendent latéralement des côtés longitudinaux 13. Certaines formes de réalisation sont issues du constat que lorsque le dispositif de transport 1 est chargé sur la remorque 3, une grande partie arrière du dispositif de transport 1 est situé en dehors des roues arrières de la remorque 3 et peut être équipée de moyens de stabilisation fixes qui se logent soit sous le châssis lorsqu'ils se trouvent dans l'emprise longitudinale de la remorque (cf. fig. 1 et 5), soit à l'arrière de la remorque lorsqu'ils dépassent de celle-ci (cf. fig. 3 et 4). Lorsque le dispositif de transport 1 est situé dans l'emprise longitudinale de la remorque, il peut également être équipé de moyens de stabilisation mobiles entre une position escamotée et une position déployée (cf. fig. 6 et 7).

La figure 1 illustre un premier mode de réalisation des moyens de stabilisation 5 qui comportent au moins deux pattes d'appui 50 montées de part et d'autre du plateau porte-charge 10 dans les profilés de réception 14. Ces pattes d'appui 50 sont réalisées à partir de pièces métalliques par exemple mécano-soudées et comportent dans l'exemple illustré une plaque de base 51 surmontée d'un capot de protection 52 et de nervures de renfort 53 s'étendant entre la plaque et le capot. Toute autre forme de réalisation peut convenir. La plaque de base 51 a l'avantage d'offrir une surface d'appui au sol large et plane, qui peut reposer au sol quel que soit le terrain. Le capot de protection 52 protège les ouvriers sur le chantier de l'obstacle que représente chaque patte d'appui 50. Les nervures de renfort 53 garantissent la robustesse de la patte d'appui 50 et sa résistance à l'écrasement. Chaque patte d'appui 50 comporte une rampe inclinée 54 située dans le profilé de réception 14 et dont la pente est décroissante en direction de la paroi verticale 11. Cette rampe inclinée 54 permet de guider la cornière de la remorque 3 lors du chargement pour qu'elle passe au dessus de la patte d'appui 50.

Le mode de chargement du dispositif de transport 1 est illustré en référence aux figures 2A à 2C. Dans la figure 2A, le dispositif de transport 1 est chargé d'éléments préfabriqués 2 et est en attente au sol, les pattes d'appui 50 assurant sa stabilité latérale. La remorque 3 couplée à un tracteur 4, représentés en traits interrompus courts, est abaissée et recule en direction du dispositif de transport 1 pour le charger en faisant coulisser ses cornières 30, schématisées par le trait plein à sa base, dans les profilés de réception 14, à la manière d'un tiroir. Le dispositif de transport 1 est entièrement chargé sur la remorque 3, lorsque la remorque 3 est en butée contre la paroi verticale 11 du dispositif de transport 1, comme représenté à la figure 2B. On constate que les pattes d'appui 50 des moyens de stabilisation 5 sont situées sous le châssis de la remorque 3, en-dehors de ses roues arrières 31 et qu'elles ne constituent ainsi pas un obstacle au chargement. La largeur des pattes d'appui 50 sera définie pour que l'envergure latérale du dispositif de transport 1 reste dans le gabarit routier déterminé par la largeur de la remorque 3. Après chargement, la remorque 3 est relevée et soulève simultanément le dispositif de transport 1, comme représenté à la figure 2C.

Le mode de réalisation des moyens de stabilisation 6 représenté aux figures 3 et 4 est une variante de celui qui vient d'être décrit. Les pattes d'appui 50 sont remplacées par au moins un profilé d'appui 60, par exemple de section en I, fixé à l'extrémité arrière libre 12 du plateau porte-charge 10 (cf. fig. 3). Les extrémités 61 du profilé d'appui 60 dépassent la largeur du plateau porte-charge 10 et réalisent la même fonction que les pattes d'appui 50 de l'exemple précédent en augmentant son envergure latérale pour assurer sa stabilité. Lors du chargement du dispositif de transport 1 sur une remorque 3, le profilé d'appui 60 sera situé à l'arrière de la remorque 3 et ne constituera pas un obstacle au chargement, ni au transport des éléments préfabriqués 2. A la figure 4, le profilé d'appui 60 est complété par des butées verticales 62 ou tout autre organe équivalent, qui peuvent servir à différentes fonctions : fixation complémentaire des objets 2 transportés, fixation du dispositif de transport 1 à la remorque 3.

Les figures 5A à 5C illustrent des moyens de stabilisation 7 démontables de préférence sans outillage, qui sont une variante de réalisation des moyens de stabilisation 5 fixes de la figure 1. Les pattes d'appui 70 présentent la même configuration que les pattes d'appui 50, à savoir une plaque de base 71, un capot de protection 72 relié par des nervures de renfort 73 à la plaque de base 71, ainsi qu'une rampe inclinée 74 pour guider la remorque 3 lors du chargement du dispositif de transport 1. Ces moyens de stabilisation 7 comportent en plus un mécanisme de verrouillage permettant le montage et le démontage des pattes d'appui 70, en cas de besoin. Le mécanisme de verrouillage est constitué, dans le cas représenté, d'au moins une clé de verrouillage 75 emboîtée dans au moins une et de préférence plusieurs encoches 76 de la patte d'appui 70 ménagées dans les nervures de renfort 73 (cf. fig. 5D) et au moins un verrou 77 amovible agencé pour bloquer en position la clé de verrouillage 75 dans les encoches 76 pour fixer solidairement les pattes d'appui 70 au plateau porte-charge 10. Le verrou 77 est, dans l'exemple représenté, une pièce en U qui s'emboîtent dans des encoches de verrouillage 78 superposées et appartenant respectivement à la clé de verrouillage 75 et à un socle 79 fixé à demeure dans le profilé de réception 14 du plateau porte-charge 10. Bien entendu, tout autre moyen de fixation des pattes d'appui au plateau porte-charge 10 peut convenir dans la mesure où il permet le démontage et le montage de ces pattes.

Les figures 6A à 6C illustrent encore une autre forme de réalisation dans laquelle les moyens de stabilisation 8 sont escamotables automatiquement lors du chargement du dispositif de transport 1 par une remorque 3. Ces moyens de stabilisation 8 comportent au moins deux pattes d'appui 80 montées sur le plateau porte-charge 10, articulées entre elles autour d'un axe commun A perpendiculaire au plateau 10 pour être mobiles entre une position sortie dans laquelle elles s'étendent latéralement du plateau porte-charge 10 lorsque le dispositif repose au sol (cf. fig. 6A) et une position rentrée dans laquelle elles sont escamotées à l'intérieur du plateau porte-charge 10 lorsque le dispositif est chargé sur la remorque 3 (cf. fig. 6C). Ces pattes d'appui 80 peuvent également être dissociées et articulées chacune autour d'un axe A propre. En position repliée, les pattes d'appui 80 sont guidées dans des fentes latérales 15 prévues dans les profilés de réception 14 où elles demeurent maintenues par les parois 32 latérales de la remorque 3. Elles se déploient automatiquement vers leur position sortie, en basculant autour de l'axe A, au cours du déchargement du plateau porte-charge 10, étant alors libérées desdites parois latérales 32. Les pattes d'appui 80 sont assujetties à un organe de rappel (non représenté) qui les ramène automatiquement de leur position rentrée à leur position sortie. Elles comportent une rampe de guidage 81 destinée à recevoir l'extrémité d'une cornière 30 de la remorque 3 de sorte à provoquer le déplacement automatique de leur position sortie à leur position rentrée (cf. fig. 6B).

Les figures 7A et 7B illustrent une autre forme de réalisation dans laquelle les moyens de stabilisation 9 sont escamotables pour permettre le chargement du dispositif de transport 1 par une remorque 3. Ces moyens de stabilisation 9 comportent au moins deux pattes d'appui 90 montées sur le plateau porte-charge 10, articulées chacune autour d'un axe A perpendiculaire au plateau 10 pour être mobiles entre une position sortie dans laquelle elles s'étendent latéralement du plateau porte-charge 10 lorsque le dispositif repose au sol (cf. fig. 7A) et une position rentrée dans laquelle elles sont escamotées à l'intérieur du plateau porte-charge 10 lorsque le dispositif est chargé sur la remorque 3 (cf. 7B). Dans leur position rentrée, les pattes d'appui 90 sont rabattues manuellement le long de l'extrémité arrière 12 (ajouté sur fig.) du plateau porte-charge 10, et sont verrouillées dans cette position manuellement au moyen d'un loquet 17. Celui-ci doit être retiré par un opérateur avant le déchargement du plateau porte-charge 10 pour permettre le déploiement des pattes d'appui 90 par basculement autour des axes A. Les pattes d'appui 90 sont assujetties à un organe de rappel (non représenté) qui les ramène automatiquement de leur position rentrée à leur position sortie, après retrait du loquet 17 et suppression de tout obstacle tel que les parois latérales 32 de la remorque 3. Bien entendu, toute autre forme de réalisation de pattes d'appui escamotables intégrées dans le plateau porte-charge 10 est envisageable.

### Possibilités d'application industrielle :

Les différentes solutions décrites sont réalisées à partir de pièces métalliques simples, obtenues par usinage, découpage et/ou pliage et assemblées par soudage, ou par tout autre moyen procédé industriel équivalent. Ces solutions simples permettent de modifier les dispositifs de transport 1 déjà existants à moindre coût pour les rendre fiables et totalement sécurisés.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif (1) pour le transport d'objets (2), notamment d'éléments préfabriqués sous forme de plaques ou similaires, comportant un plateau porte-charge (10) destiné à recevoir lesdits objets entreposés sur leur chant, ce plateau porte-charge comportant une extrémité avant pourvue d'une paroi verticale (11) à laquelle sont fixés lesdits objets, une extrémité arrière libre (12) et deux côtés longitudinaux (13) reliant lesdites extrémités et comportant des moyens de réception (14) d'une remorque (3) d'un tracteur (4), ce dispositif comportant également des moyens de stabilisation (5 à 9) agencés pour stabiliser latéralement ledit dispositif lorsqu'il repose au sol, **caractérisé en ce que** lesdits moyens de stabilisation (5 à 9) sont disposés par paire de part et d'autre dudit plateau porte-charge (10), à distance de ladite paroi verticale (11), et s'étendent latéralement desdits côtés longitudinaux (13) dudit plateau.

2. Dispositif selon la revendication 1, **caractérisé en ce que** lesdits moyens de stabilisation (5 à 7) sont disposés dans une zone arrière du plateau porte-charge (10) à l'opposé de ladite paroi verticale (11), ladite zone arrière étant destinée à être située en dehors des roues arrières (31) de la remorque (3).

3. Dispositif selon la revendication 2, **caractérisé en ce que** lesdits moyens de stabilisation (5 à 7) sont fixes.

4. Dispositif selon la revendication 3, **caractérisé en ce que** lesdits moyens de stabilisation (5, 7) comportent au moins deux pattes d'appui (50, 70) montées de part et d'autre du plateau porte-charge (10) dans lesdits moyens de réception (14).

5. Dispositif selon la revendication 4, **caractérisé en ce que** lesdites pattes d'appui (50) comportent chacune une rampe inclinée (54) située dans lesdits moyens de réception (14) et dont la pente est décroissante en direction de ladite paroi verticale (11).

6. Dispositif selon la revendication 3, **caractérisé en ce que** lesdits moyens de stabilisation (6) comportent au moins un profilé d'appui (60) fixé à l'extrémité arrière libre (12) et s'étendant latéralement du plateau porte-charge (10).

7. Dispositif selon la revendication 6, **caractérisé en ce que** ledit profilé d'appui (60) comporte des butées verticales (62) auxquelles lesdits objets (2) peuvent être fixés.

8. Dispositif selon la revendication 4, **caractérisé en ce que** lesdites pattes d'appui (70) sont démontables.

9. Dispositif selon la revendication 8, **caractérisé en ce que** chaque patte d'appui (70) comporte au moins une clé de verrouillage (75) emboîtée dans au moins une encoche (76) de ladite patte d'appui (70) et au moins un verrou (77) amovible agencé pour bloquer en position ladite clé de verrouillage (75) dans ladite encoche (76).

10. Dispositif selon la revendication 1, **caractérisé en ce que** lesdits moyens de stabilisation (8, 9) comportent au moins deux pattes d'appui (80, 90) montées sur ledit plateau porte-charge (10), articulées autour d'un axe (A) perpendiculaire audit plateau pour être mobiles entre une position sortie dans laquelle elles s'étendent latéralement du plateau porte-charge (10) lorsque ledit dispositif repose au sol et une position rentrée dans laquelle elles sont escamotées à l'intérieur dudit plateau porte-charge (10) lorsque ledit dispositif est chargé sur la remorque (3).

11. Dispositif selon la revendication 10, **caractérisé en ce que** lesdites pattes d'appui (80) sont guidées dans des fentes latérales (15) prévues dans lesdits moyens de réception (14), sont articulées entre elles autour dudit axe perpendiculaire qui se déplace par rapport audit plateau porte-charge (10) pour passer de la position sortie à la position rentrée, et sont assujetties à un organe de rappel qui les ramène automatiquement de leur position rentrée à leur position sortie.

12. Dispositif selon la revendication 11, **caractérisé en ce que** lesdites pattes d'appui (80) comportent une rampe de guidage (81) destinée à recevoir l'extrémité d'une cornière (30) de la remorque (3) de sorte à provoquer le déplacement automatique de leur position sortie à leur position rentrée lorsque la remorque (3) charge ledit dispositif (1).

## Claims

1. Device (1) for transporting objects (2), in particular prefabricated flat or similar elements, comprising a loading platform (10) intended for receiving said objects placed on an edge, while this loading platform comprises a front edge provided with a vertical wall (11) to which said objects are fastened, a free rear end (12) and two longitudinal sides (13) connecting said ends and comprising means (14) for receiving a trailer (3) of a truck tractor (4), this device comprising also stabilization means (5 to 9) arranged to stabilize said device laterally when it rests on the ground, **characterized in that** said stabilization means (5 to 9) are arranged in pairs on each side of said loading platform (10), distant from said vertical wall (11), and extend laterally from said longitudinal sides (13) of said platform.

2. Device according to claim 1, **characterized in that** said stabilization means (5 to 7) are arranged in a rear area of the loading platform (10), opposite to said vertical wall (11), said rear area being intended for being located outside of the rear wheels (31) of the trailer (3).

3. Device according to claim 2, **characterized in that** said stabilization means (5 to 7) are fixed.

4. Device according to claim 3, **characterized in that** said stabilization means (5, 7) comprise at least two supporting plates (50, 70) mounted on each side of the loading platform (10) in said receiving means (14).

5. Device according to claim 4, **characterized in that** said supporting plates (50) comprise each a sloping ramp (54) located in said receiving means (14) and whose slope decreases towards said vertical wall (11).

6. Device according to claim 3, **characterized in that** said stabilization means (6) comprise at least one supporting profile (60) fastened at the free read end (12) and extending laterally from the loading platform (10).

7. Device according to claim 6, **characterized in that** said supporting profile (60) comprises vertical stops (62) to which said objects (2) can be fastened.

8. Device according to claim 4, **characterized in that** said supporting plates (70) are dismountable.

9. Device according to claim 8, **characterized in that** each supporting plate (70) comprises at least one locking key (75) fitted in at least one notch (76) of said supporting plate (70) and at least one removable lock (77) arranged to lock said locking key (75) in position in said notch (76).

10. Device according to claim 1, **characterized in that** said stabilization means (8, 9) comprise at least two supporting plates (80, 90) mounted on said loading platform (10), articulated around an axis (A) perpendicular to said platform so as to be movable between an extended position in which they extend laterally from the loading carrier (10) when said device rests on the ground and a retracted position in which they are retracted inside of said loading carrier (10) when said device is loaded on trailer (3).

11. Device according to claim 10, **characterized in that** said supporting plates (80) are guided in lateral slots (15) provided in said receiving means (14), are articulated to each other around said perpendicular axis, which moves with respect to said loading carrier (10) to go from the extended position to the retracted position, and which are subjected to return means that bring them back automatically from their retracted position to their extended position.

12. Device according to claim 11, **characterized in that** said supporting plates (80) comprise a guide ramp (81) intended for receiving the end of an angle steel (30) of trailer (3) in order to cause the automatic move from their extended position to their retracted position when trailer (3) loads said device (1).

## Patentansprüche

1. Vorrichtung (1) für den Transport von Gegenständen (2), insbesondere von vorgefertigten plattenförmigen oder ähnlichen Elementen, bestehend au seiner Ladepritsche (10), die die besagten Gegenstände hochkantig aufgestellt aufnimmt, wobei diese Ladepritsche ein mit einer vertikalen Wand (11) ausgestattetes vorderes Ende beträgt, an dem die besagten Gegenstände befestigt werden, sowie ein freies hinteres Ende (12) und zwei Seitenwände (13), die die besagten Enden verbinden und mit den Aufnahmemitteln (14) für einen Anhänger (3) eines Sattelschleppers (4) ausgestattet sind, wobei diese Vorrichtung ebenfalls Stabilisierungsmittel (5 bis 9) beträgt, die angeordnet sind, um die besagte Vorrichtung seitlich zu stabilisieren, wenn sie auf dem Boden aufliegt, **dadurch gekennzeichnet, dass** die besagten Stabilisierungsmittel (5 bis 9) paarweise beidseitig der besagten Ladepritsche (10), von der besagten vertikalen Wand (11) entfernt angeordnet sind und sich seitlich von den besagten Seitenwänden (13) der besagten Pritsche aus erstrecken.

2. Vorrichtung nach Anspruch 1, **dadurch gekennzeichnet, dass** die besagten Stabilisierungsmittel (5 bis 7) in einem hinteren, der vertikalen Vorderwand (11) entgegen gesetzten Bereich der Ladepritsche (10) angeordnet sind, wobei der besagte hintere Bereich dazu bestimmt ist, sich außerhalb der Hinterräder (31) des Anhängers (3) zu befinden.

3. Vorrichtung nach Anspruch 2, **dadurch gekennzeichnet, dass** die besagten Stabilisierungsmittel (5 bis 7) feststehend sind.

4. Vorrichtung nach Anspruch 3, **dadurch gekennzeichnet, dass** die besagten Stabilisierungsmittel (5, 7) mindestens zwei beidseitig der Ladepritsche (10) in den besagten Aufnahmemitteln (14) montierte Auflagestützen (50, 70) betragen.

5. Vorrichtung nach Anspruch 4, **dadurch gekennzeichnet, dass** die besagten Auflagestützen (50) jeweils eine in den besagten Aufnahmemitteln (14) befindliche geneigte Rampe (54) betragen, deren Neigung in Richtung der besagten vertikalen Wand (11) abnimmt.

6. Vorrichtung nach Anspruch 3, **dadurch gekennzeichnet, dass** die besagten Stabilisierungsmittel (6) zumindest ein am freien hinteren Ende (12) befestigtes und sich seitlich von der Ladepritsche (10) erstreckendes Auflageprofil (60) betragen.

7. Vorrichtung nach Anspruch 6, **dadurch gekennzeichnet, dass** das besagte Auflageprofil (60) vertikale Anschläge (62) beträgt, an denen die besagten Gegenstände (2) befestigt werden können.

8. Vorrichtung nach Anspruch 4, **dadurch gekennzeichnet, dass** die besagten Auflagestützen (70) abnehmbar sind.

9. Vorrichtung nach Anspruch 8, **dadurch gekennzeichnet, dass** jede Auflagestütze (70) mindestens eine in mindestens eine Kerbe (76) der besagten Auflagestütze (70) eingefügte Verriegelung (75) beträgt, sowie mindestens einen abnehmbaren Riegel (77), der ausgelegt ist, um die besagte Verriegelung (75) in der besagten Kerbe (76) in Position zu blockieren.

10. Vorrichtung nach Anspruch 1, **dadurch gekennzeichnet, dass** die besagten Stabilisierungsmittel (8, 9) mindestens zwei auf der besagten Ladepritsche (10) montierte Auflagestützen (80, 90) betragen, die um eine zur besagten Pritsche senkrechte Achse (A) drehen können, um zwischen einer ausgefahrenen Lage, in der sie sich seitlich von der Ladepritsche (10) aus erstrecken wenn die besagte Vorrichtung auf dem Boden aufliegt und einer eingefahrenen Lage, in der sie innerhalb der besagten Ladepritsche (10) eingeklappt sind wenn die besagte Vorrichtung auf dem (3) Anhänger geladen ist, bewegt werden zu können.

11. Vorrichtung nach Anspruch 10, **dadurch gekennzeichnet, dass** die besagten Auflagestützen (80) in in den besagten Aufnahmemitteln (14) angebrachten Schlitzen (15) geführt sind, um die besagte senkrechte Achse gelenkig miteinander verbunden sind, wobei sich die besagte senkrechte Achse in Bezug auf die besagte Ladepritsche (10) bewegt um von der ausgefahrenen Lage in die eingefahrenen Lage über zu gehen, und von einem Rückstellelement, das sie automatisch von ihrer eingefahrenen Lage in ihre ausgefahrene Lage zurückbringt, unter Spannung gesetzt sind.

12. Vorrichtung nach Anspruch 11, **dadurch gekennzeichnet, dass** die besagten Auflagestützen (80) eine Führungsrampe (81) betragen, die dazu bestimmt ist, das Ende eines Winkelprofils (30) des Anhängers (3) aufzunehmen, um die automatische Bewegung von ihrer ausgefahrenen Lage in ihre eingefahrene Lage zu bewirken wenn der Anhänger (3) die besagte Vorrichtung (1) aufnimmt.
